Europäisches Patentamt

European Patent Office

Office européen des brevets

(11) Veröffentlichungsnummer: **0 243 658 B1**

(12) # EUROPÄISCHE PATENTSCHRIFT

(45) Veröffentlichungstag der Patentschrift: **20.05.92**

(51) Int. Cl.⁵: **F16L 55/12**, G01M 3/00

(21) Anmeldenummer: **87104137.2**

(22) Anmeldetag: **20.03.87**

(54) **In eine Rohrleitung einsetzbare Absperrvorrichtung.**

(30) Priorität: **29.03.86 DE 3610625**
**30.07.86 DE 3625838**

(43) Veröffentlichungstag der Anmeldung:
**04.11.87 Patentblatt 87/45**

(45) Bekanntmachung des Hinweises auf die
Patenterteilung:
**20.05.92 Patentblatt 92/21**

(84) Benannte Vertragsstaaten:
**BE DE FR GB NL SE**

(56) Entgegenhaltungen:
**GB-A- 1 452 232      GB-A- 1 554 894**
**US-A- 2 786 489      US-A- 3 495 626**
**US-A- 3 543 852      US-A- 4 413 653**
**US-A- 4 422 477**

(73) Patentinhaber: **DEN NORSKE STATS OLJE-
SELSKAP A.S.**
**Postboks 300 Forus**
**N-4001 Stavanger(NO)**

(72) Erfinder: **Johansen, Trond Vidar**
**Ole Nordgardsv. 78**
**N-7000 Trondheim(NO)**
Erfinder: **Ruch, Ola**
**Ovre Flatasvei 32**

**N-7079 Flatasen(NO)**
Erfinder: **Naess, Ludvig**
**Moltemyra 3a**
**N-7075 Tiller(NO)**
Erfinder: **Weber, Robert**
**Esperstrasse 23**
**W-8525 Uttenreuth(DE)**
Erfinder: **Veenhoff, Bernd**
**Eichenstrasse 4**
**W-8521 Langensendelbach(DE)**
Erfinder: **Pörner, Horst**
**Erlanger Strasse 60**
**W-8551 Röttenbach(DE)**
Erfinder: **Laurer, Erwin**
**Frankenstrasse 5**
**W-8521 Möhrendorf(DE)**
Erfinder: **Strickroth, Erich**
**Zeidelweide 8b**
**W-8521 Buckenhof(DE)**
Erfinder: **Schabert, Hans-Peter**
**Friedrich-Bauer-Strasse 28**
**W-8520 Erlangen(DE)**

(74) Vertreter: **LOUIS, PÖHLAU, LOHRENTZ & SE-
GETH**
**Kesslerplatz 1 Postfach 3055**
**W-8500 Nürnberg-1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine in einer Rohrleitung bewegbare Absperrvorrichtung, die in die Rohrleitung einsetzbar und in der Rohrleitung während des normalen Betriebes der Rohrleitung, während welchem ein Strömungsmedium durch die Rohrleitung strömt, geeignet positionierbar ist, wobei die Absperrvorrichtung

a) einen Hohlzylinder

b) eine am Hohlzylinder vorgesehene Halteeinrichtung zum Festbremsen der Absperrvorrichtung an einer vorgegebenen Stelle in der Rohrleitung,

c) ein zum Durchlass des Strömungsmediums durch die Rohrleitung am Hohlzylinder vorgesehenes Ventil, das zwischen einer Öffnungs- und einer Verschlußstellung verstellbar ist,

d) eine fernsteuerbare, radial verstellbare Dichteinrichtung zum Abdichten des zwischen der Wandung der Rohrleitung und dem Hohlzylinder gegebenen Spaltraums, an dem die Dichteinrichtung am Hohlzylinder angebracht und zwischen dem Hohlzylinder und der Wandung der Rohrleitung angeordnet ist,

e) eine Einrichtung zum ferngesteuerten Verschliessen und Öffnen des Ventils, und

f) eine Einrichtung zum Pressen der Dichteinrichtung gegen die Wandung der Rohrleitung ab einer bestimmten Druckdifferenz zwischen der Seite, an welcher das Strömungsmittel in die Absperrvorrichtung eintritt, und der Seite, an welcher das Strömungsmittel aus der Absperrvorrichtung austritt,

aufweist.

Eine derartige Absperrvorrichtung ist aus der US-A-34 95 626 bekannt. Bei dieser bekannten Absperrvorrichtung weist der Hohlzylinder einen im Vergleich zum Durchlassquerschnitt der Rohrleitung kleinen Durchlassquerschnitt auf, so dass die Strömung durch die Absperrvorrichtung hindurch im Vergleich zur normalen Strömung durch die Rohrleitung hindurch beeinträchtigt ist. Aus diesem Grunde ist diese bekannte Absperrvorrichtung auch nur dazu vorgesehen, erst dann in eine Rohrleitung eingesetzt zu werden, wenn die Rohrleitung reparaturbedürftig ist, d.h. wenn bspw. ein undichtes Rohrstück aus der Rohrleitung entfernt und durch ein neues, dichtes Rohrstück ersetzt werden muss.

Eine Absperrvorrichtung der oben genannten Art ist auch aus der GB-A-14 52 232 bekannt. Dort ist der Hohlzylinder an seiner Vorderseite, d.h. an seiner stromabwärtigen Seite, mit einem Stirnelement abgeschlossen, so dass die Durchströmung des Hohlzylinders zumindest beeinträchtigt bzw. durch das zwischen einer Öffnungs- und einer Verschlußstellung verstellbare Ventil unterbrochen ist. Durch dieses Ventil ist der Durchfluss durch den Hohlzylinder so lange unterbrochen, bis die Absperrvorrichtung an Anschlageinrichtungen zur Anlage kommt, die sich in die Rohrleitung hineinerstrecken. Die Anschlageinrichtungen bedingen einen nicht zu vernachlässigenden Arbeitsaufwand sowohl bei ihrer Herstellung als auch bei ihrer Montage an der Rohrleitung. Diese bekannte Absperrvorrichtung ist ebenfalls nur dazu vorgesehen, erst dann in eine Rohrleitung eingebracht zu werden, wenn die Rohrleitung reparaturbedürftig ist.

Die US-A-44 13 653 offenbart eine Vorrichtung, die zur Fixierung in einer Rohrleitung vorgesehen ist und die zu diesem Zweck einen Hohlzylinder und eine am Hohlzylinder vorgesehene Halteeinrichtung zum Festbremsen der Vorrichtung an einer vorgegebenen Stelle in der Rohrleitung aufweist. Diese Vorrichtung besitzt einen ring- bzw. rohrförmigen Gummibalg mit eingezogenen Enden, die mittels geeigneter Klemmkörper am Hohlzylinder festgelegt sind. Auf diese Weise ist der Raum zwischen dem Hohlzylinder und dem Gummibalg abgedichtet bzw. in den Hohlraum ein Medium einleitbar, um den Gummibalg aufzuweiten und hierdurch die Vorrichtung in der Rohrleitung an einem gewünschten Ort zu fixieren.

Aus der EP-A-0 087 867 ist eine Rohrverschlussvorrichtung bekannt, die nach Auftreten eines Lecks oder für Prüfzwecke in eine Rohrleitung einführbar ist. Diese Rohrverschlusseinrichtung besteht aus zwei miteinander kuppelbaren Körpern, von denen der eine nach Art eines elastischen Stopfens ausgebildet ist, der an seinem Umfang Dichtungslippen hat, deren Durchmesser dem Innendurchmesser des Rohres entsprechen. Der zweite Körper dient zur Verankerung und ist nach Art eines Topfes ausgebildet, der aus einem Metallboden und einem damit verbundenen radial aufweitbaren Mantel aus gummielastischem Material gebildet ist. Der Mantel besteht in einem dem Metallboden benachbarten Bereich aus mehreren elastischen Kunststofflagen mit metallarmierten Einlagen, die den eigentlichen Verankerungsteil bilden. Am Metallboden ist ein Rückschlagventil angeordnet, das über eine elektronische Einrichtung ferngesteuert in die offene oder geschlossene Lage gebracht werden kann. Nach dem Einsetzen der Rohrverschlusseinrichtung in die Rohrleitung wird diese bei geöffnetem Ventil zu einer vorgegebenen Stelle gepumpt. Dabei bewirkt das offene Ventil einen Druckausgleich, so dass das Rohrleitungsmedium den Mantel umspült und er sich während des Transports nicht an die Rohrwand legen kann. Zum Verankern der Rohrverschlussvorrichtung wird das Ventil durch ein elektromagnetisches Signal ferngesteuert geschlossen und das Rohrleitungsmedium unter Druck gesetzt, wodurch der Mantel des Verankerungsteiles an die Rohrwandung gedrückt und durch Reibungsschluss festgehalten wird. Zum Aufheben der Verankerung wird das Ventil wieder geöffnet, wobei sich durch den Druckausgleich der elastische Mantel wieder zusammenzieht und von der Innenfläche der Rohrleitung abgehoben wird.

Eine ähnliche Einrichtung ist aus der DE-C-31 42 768 bekannt. Diese Absperrvorrichtung besteht aus einem zylindrischen Körper, der von einer aufblasbaren Gummihülse umgeben ist und an den beiden Stirnseiten je eine Ringdichtung trägt. Im Störungsfall wird die Absperrvorrichtung auf einer Plattform in die Rohrleitung eingeführt und nach Art eines Kolbens durch die Rohrleitung geschwemmt. In der Nähe der Leckstelle wird die Verschlussvorrichtung in der Rohrleitung arretiert. Hierzu werden mittels Fernzündung Pressgasflaschen, die innerhalb des zylinderförmigen Körpers angeordnet sind, geöffnet, so dass Gas in die Gummiblase eingeleitet wird, die eine äussere Hülse an die Rohrwandung drückt und auf diese Weise die Verschlussvorrichtung in der Rohrleitung festbremst. Dadurch gelangt kein weiteres Medium mehr zu der Leckstelle.

Die bekannten Verschlussvorrichtungen werden also erst im Störungsfall, d.h. wenn z.B. ein Leck in einer Rohrleitung auftritt, nach Art eines Kolbens durch die Rohrleitung geschwemmt und zu einer vorgegebenen Stelle gebracht. Die Anwendung solcher Verschlusseinrichtungen erfordert geraume Zeit, bis sie im Falle eines Lecks in die Nähe der Undichtigkeitsstelle befördert sind.

Der Erfindung liegt die Aufgabe zugrunde, eine in einer Rohrleitung bewegbare Absperrvorrichtung der eingangs genannten Art zu schaffen, die sich dauernd in der Rohrleitung befinden kann, ohne den Mediumfluss in der Rohrleitung zu beeinträchtigen, und die beim Auftreten eines Lecks in der Rohrleitung unmittelbar, d.h. ohne Zeitverzögerung in Tätigkeit gesetzt werden kann.

Diese Aufgabe wird erfindungsgemäss dadurch gelöst, dass das Ventil im Hohlzylinder angeordnet und zum normalen Durchlass des gesamten, die Rohrleitung durchströmenden Strömungsmediums bemessen ist, und dass eine Einrichtung zum automatischen Verschliessen des Ventils vorgesehen ist, wenn die Strömungsgeschwindigkeit des Strömungsmittels in der Rohrleitung seine normale Betriebsgeschwindigkeit übersteigt.

Die erfindungsgemässe Verschlussvorrichtung kann im Gegensatz zu den bekannten Verschlussvorrichtungen bereits vor dem Auftreten eines Lecks während des Betriebes der Rohrleitung in diese eingeführt und an einer sicherheitstechnisch relevanten, vorgegebenen Stelle verankert werden.

Weiterbildungen der erfindungsgemässen Absperrvorrichtung sind in den Unteransprüchen gekennzeichnet.

Im Hohlzylinder sind vorzugsweise ein Ventilkegel und eine zwischen der Rohrwandung und dem Hohlzylinder angeordnete, radial verstellbare Dichteinrichtung vorgesehen, wobei im Normalbetrieb die bei geöffnetem Ventilkegel entstehende Druckdifferenz des Strömungsmittels zur Bildung von Festhaltekräften der Halteeinrichtung dient und die durch Schliessen des Ventilkegels entstehende erhöhte Druckdifferenz zum Erzeugen der erforderlichen höheren Festhaltekraft ausgenutzt ist. Diese Ausbildung hat den Vorteil, dass Druckspeicher zum Beaufschlagen der Bremshülle entfallen können und die Haltekräfte die Rohrwand erst dann nennenswert belasten, wenn der Ventilkegel geschlossen ist.

Der Hohlzylinder der Absperrvorrichtung ist vorzugsweise formstabil ausgebildet und weist Dichtstellen zur Aufnahme der eingezogenen Enden eines ringförmigen Gummibalges und Klemmkörper zum Befestigen des Gummibalges auf, der von einer längsgeschlitzten Bremshülle aus Metall umgeben ist, welche auf der dem Druck abgewandten Seite mit dem Hohlzylinder verbunden ist, der vom Leitungsmedium durchströmt ist und auf der dem Druck zugewandten Seite die radial verstellbare Dichteinrichtung trägt, die den ringförmigen Raum zwischen der Rohrleitung und dem Hohlzylinder abschliesst, wobei der Ventilkegel im geöffneten Zustand das Leitungsmedium durchlässt und im geschlossenen Zustand absperrt. Auf diese Weise überlagern sich bei geschlossenem Ventilkegel die auf die Rohrwand wirkenden Haltekräfte nicht mit den Kräften aus dem vollen Gasdruck, da sie auf der Niederdruckseite angreifen, so dass die Rohrwand nicht überbeansprucht wird.

Es ist günstig, zum Absperren von Rohrleitungen mit sehr hohem Mediumdruck zwei Hohlzylinder vorzusehen und zumindest an einem Ende des ersten Hohlzylinders ein Kupplungsteil anzuordnen, das mit einem an dem zweiten Hohlzylinder angebrachten Kupplungsteil in Eingriff gebracht und gedichtet werden kann, wobei am ersten Hohlzylinder das Ventil und die radial verstellbare Dichteinrichtung und am zweiten Hohlzylinder die Halteeinrichtung angeordnet ist. Dadurch wird auch bei den für die Erzeugung von grossen Haltekräften erforderlichen grossen Bremsflächen das Durchfahren von Rohrkrümmern ermöglicht.

Die Erfindung wird im folgenden anhand schematischer Zeichnungen näher erläutert. Darin zeigt:

| | |
|---|---|
| Fig. 1 | eine Rohrleitungsführung mit einer Bohrinsel und einer Plattform, |
| Fig. 2 | eine Absperrvorrichtung, |
| Fig. 3 | einen Teilquerschnitt der Bremshülle der in Fig.2 gezeigten Absperrvorrichtung, |
| Fig. 4 | die Ausbildung eines Ventilkegels, |

Fig. 5 einen Ausschnitt einer modifizierten Festhalteeinrichtung der Absperrvorrichtung in der eingezogenen Lage,

Fig. 6 einen Ausschnitt in der ausgestellten Lage,

Fig. 7 und 8 Querschnitte zu Fig. 5 und 6 und

Fig. 9 eine Absperrvorrichtung, bei der ein Ventil und eine radial verstellbare Dichteinrichtung an einem ersten Hohlzylinder und eine Halteeinrichtung an einem zweiten Hohlzylinder angeordnet sind, wobei die beiden Hohlzylinder miteinander kuppelbar sind.

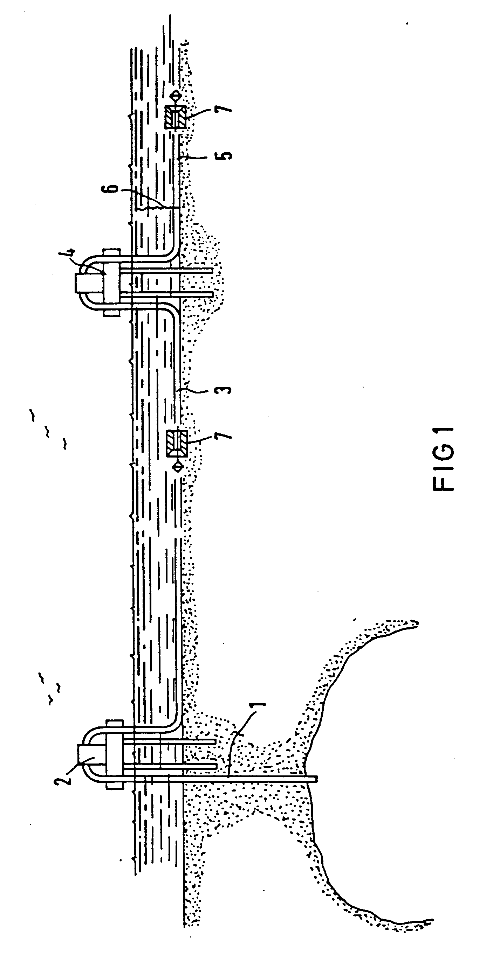

In Fig. 1 ist mit 1 eine Rohrleitung bezeichnet, durch die Erdgas in eine Bohrinsel 2 gefördert und über eine Rohrleitung 3 zu einer weiteren Insel oder Plattform 4 geführt wird. Von dort führt eine weitere Rohrleitung 5 zu einer weit entfernten Plattform, die in der Zeichnung nicht gezeigt ist. Tritt im Nahbereich der Plattform 4 ein Leck 6 in der Rohrleitung 5 auf, so wird die Leckstelle auch nach Absperren der Rohrleitung 5 auf der Plattform 4 aus der unter Druck stehenden, oft mehr als 100 km langen Rohrleitung 5 zwischen der Plattform 4 und der weiteren Plattform gespeist, wobei in der Rohrleitung 5 zwischen Leckstelle und weiterer Plattform eine Strömung zur Plattform 4 hin entsteht. Es strömt brennbares Gas aus, das die Plattform 4 gefährden kann. Um die Ausströmmenge zu begrenzen, werden in die Rohrleitungen Absperr-Vorrichtungen 7 eingesetzt.

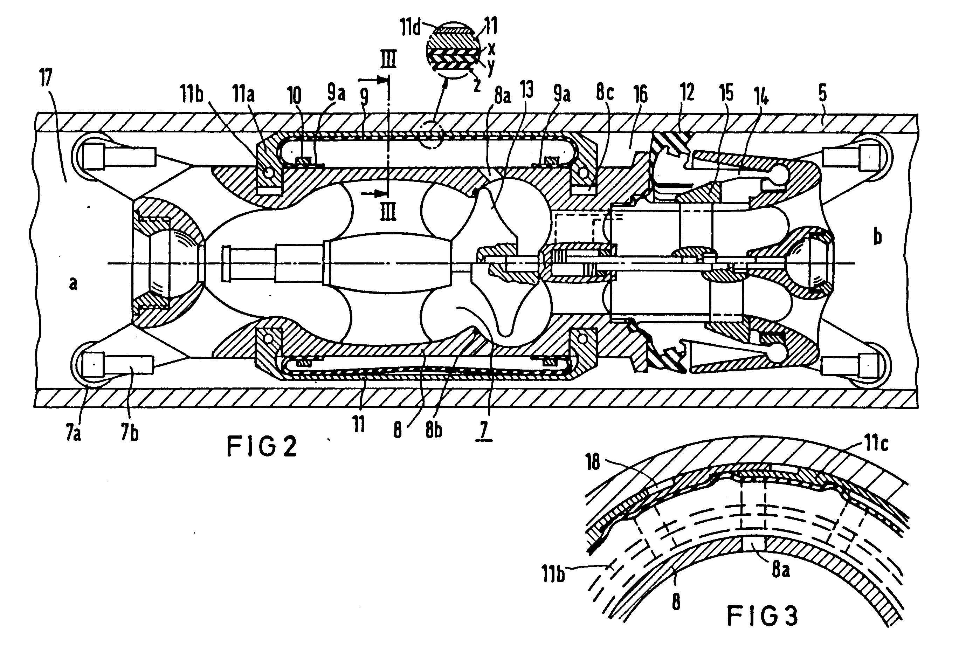

In Fig. 2 ist eine derartige Absperrvorrichtung dargestellt. Die obere Schnitthälfte zeigt die ausgestellte Lage und die untere Schnitthälfte die eingezogene Lage der Bremshülle 11 und der Dichteinrichtung 12. Zum Ein und Ausbau der Absperrvorrichtung 7 weist sie ein Fahrwerk mit Rädern 7a auf, das mit Antrieben 7b ausgestattet ist. Eine Inspektionsöffnung an einer zugänglichen Stelle der Rohrleitung im Bereich der Plattform bzw. der Bohrinsel gestattet das Einführen und die Entnahme der Absperrvorrichtung. Ist die Absperrvorrichtung in die Rohrleitung eingeführt, so werden die Antriebsräder 7a so stark an die Rohrwand angedrückt, daß auch Steigungen befahren werden können. Die Absperrvorrichtung wird am Ende des Nahbereiches vor der Insel bzw. Plattform 4 postiert (Fig. 1).

Die Absperrvorrichtung besteht - wie Fig. 2 zeigt - aus einem Hohlzylinder 8, der Dichtstellen zur Aufnahme von eingezogenen Enden 9a eines ringförmigen Gummibalges 9 und als Ringe ausgebildete Klemmkörper 10 zum Befestigen des Gummibalges 9 aufweist. Der Gummibalg 9 ist von einer längsgeschlitzten Bremshülle 11 aus Metall mit an Jedem Ende befindlichen geschlitzten Innenbund 11a umgeben. Die auf der dem Druck zugewandten Seite befindliche Stirnseite trägt eine radial verstellbare Dichteinrichtung 12, die den ringförmigen Spalt zwischen der Rohrleitung 5 und dem Hohlzylinder 8 abschließt. Am Hohlzylinder 8 ist ein Ventilsitz 8b angeordnet, dem ein Ventilkegel 13a zugeordnet ist, der im geöffneten Zustand (untere Schnitthälfte) das Leitungsmedium durchläßt und im geschlossenen Zustand (obere Schnitthälfte) absperrt.

Nach dem Einbringen der Absperrvorrichtung 7 in die Rohrleitung 5 wird sie arretiert, indem die Bremshülle 11 an die Rohrwandung gedrückt wird. Hierzu weist der Hohlzylinder 8 Durchbrüche 8a auf, die nach dem Andrücken der Dichteinrichtung 12 an die Rohrwandung das Leitungsmedium der Druckseite in den Raum zwischen Gummibalg 9 und Hohlzylinder 8 gelangen lassen, während der Hohlzylinder 8 vom Leitungsmedium durchströmt ist. Durch den entstehenden Differenzdruck wird der Gummibalg 9 und damit die Bremshülle 11 an die Innenwand des Rohres 5 angepreßt, wobei eine Haltekraft entsteht, die größer ist als die axiale, auf die Absperrvorrichtung 7 wirkende Schiebekraft.

Bei arretierter Absperrvorrichtung kann das Leitungsmedium in Normalbetrieb die Rohrleitung 5 weiter durchströmen. In der Absperrvorrichtung 7 sind Mittel zum fernbedienbaren Schließen und Öffnen des Ventilkegels 13a und zum selbsttätigen Schließen des Ventilkegels 13a vorgesehen. Tritt im Nahbereich der Plattform 4 ein Leck 6 auf, so wird dies von Überwachungseinrichtungen auf der Plattform erkannt und der Ventilkegel 13a kann fernbedient geschlossen werden.

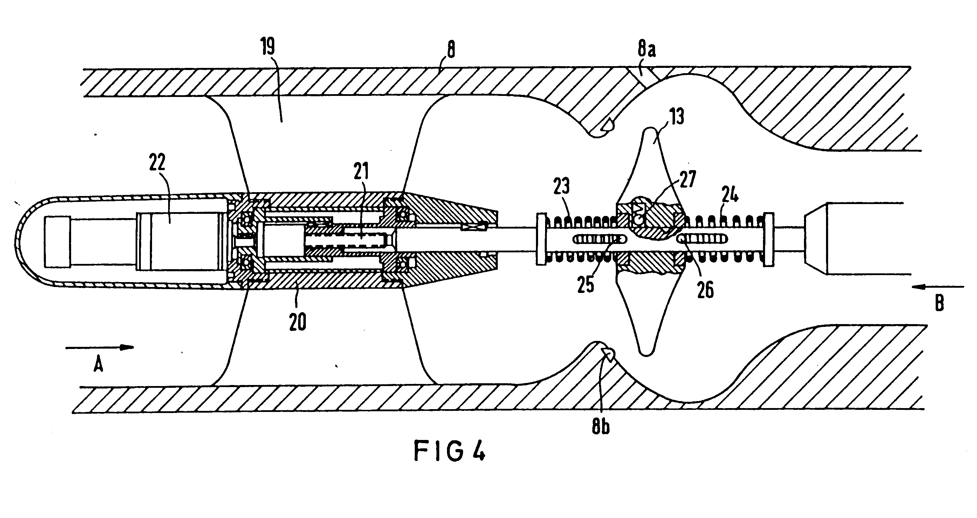

Eine übergeordnete, in den Ventilkegel 13a integrierte selbsttätige Schließeinrichtung ermöglicht das automatische Schließen auch bei Funktionsstörungen im Fernbedienungssystem. Dies wird dadurch erreicht, daß der Ventilkegel 13a auf erhöhte Durchströmung, die durch das Leck entsteht, reagiert, wie weiter unten zu Fig. 4 näher beschrieben ist.

Der an den beiden Enden der geschlitzten Bremshülle 11 befindliche geschlitzte Innenbund 11a greift zur Axialarretierung in Ringnuten 8c des Hohlzylinders 8 ein. Die geschlitzte Bremshülle 11 besteht zweckmäßigerweise aus an beiden Enden abgewinkelten biegesteifen Bremskufen. Dabei ist der abgewinkelte Teil der Bremskufen einschließlich des Übergangs zur Kufe selbst zumindest auf der dem Druck abgewandten Seite a biegestief ausgebildet. Dadurch werden Rückstellkräfte weitgehend vermieden.

Um zu vermeiden daß der Gummibalg 9 in der ausgestellten Lage die Rohrleitungswand berührt, sind die Bremskufen 11c tangential überlappt ausgebildet (Fig. 3).

Den Bremskufen sind Rückzugselemente 11b in Form einer Ringfeder zugeordnet. Diese Ringfeder verhindert ein Ausstellen der Bremshülle 11 beim Ein- und Ausbau der Absperrvorrichtung 7.

Der Gummibalg 9 ist in vorteilhafter Weise mehrlagig ausgebildet, wobei die einzelnen Lagen x, y, z unterschiedliche Härte aufweisen. Dadurch wird eine höhere Verschleißfestigkeit und eine größere Sicherheit gegen eventuelle mechanische Beschädigungen erreicht.

Es ist zweckmäßig, die radial verstellbare Dichteinrichtung 12 derart anzuordnen und auszubilden, daß bei Auftreten einer vorgegebenen Druckdifferenz zwischen der Eintrittsstelle des Strömungsmediums in die Absperrvorrichtung und der Austrittsseite des Strömungsmediums aus dem Ventilkegel 13a die Dichteinrichtung 12 zusätzlich zu mechanischen Mitteln an die Wand der Rohrleitung gepreßt wird. Als mechanische Mittel sind der Dichteinrichtung 12 auf der dem Druck ausgesetzten Seite b des Hohlzylinders 8 federnde Klinken 14 an der Außenseite des Hohlzylinders 8 zugeordnet, und dort schwenkbar gelagert. An ihren freien Enden haben die Klinken 14 Aufnahmen zur Befestigung der ringförmigen Dichteinrichtung 12, die als Profildichtung ausgebildet ist. Die federnden Klinken 14 drücken die Dichteinrichtung 12 gleichmäßig an die Rohrleitung 5 an. Der Raum innerhalb der ringförmigen Dichteinrichtung 12 ist von der Hochdruckseite b her zugänglich so daß der Differenzdruck eine zusätzliche Anpreßkraft erzeugt. Um einen Rückzug der Dichteinrichtung 12 beim Einführen und Herausnehmen der Verschlußvorrichtung 7 zu erreichen, ist am Hohlzylinder ein kegelstumpfförmiger Ring 15 axial verschiebbar angeordnet, der in der einen Lage die Klinken 14 und die Dichteinrichtung 12 entgegen der Federkraft der Klinken und der Dichteinrichtung 12 ausstellt. In der anderen Lage des Ringes 15 werden die Klinken 14 freigegeben, so daß die Klinken 14 und die Dichteinrichtung 12 zurückfedern.

Um eine günstige Elastizität und mechanische Widerstandsfähigkeit des Gummibalges 9 zu erreichen, ist dessen Dikke kleiner als 1 cm. Bevorzugt wird eine Dicke von 5 mm.

Zur Erzielung einer kleinen Baulänge der Absperrvorrichtung, ist es zweckmäßig, die Bremshülle 11 mit einem einen hohen Reibwert aufweisenden Belag 11d zu versehen.

Damit eine hohe Druckdifferenz gewährleistet ist, ist der Raum 16 mit dem Raum 17 durch Längsnuten, Rohre oder Spalte 18 (Fig. 3) verbunden.

Anhand der Fig. 4 wird die Arbeitsweise des Ventilkegels 13a näher erläutert. Im Hohlzylinder 8 ist über Arme 19 eine Nabe 20 angeordnet, in der eine Verstellspindel 21 für den Ventilkegel 13 und der Antrieb 22 gelagert ist. Auf einer Verlängerung der Ventilspindel 21 sind zwei vorgespannte Druckfedern 23, 24 mit Anschlägen 25, 26 vorgesehen, zwischen denen der Ventilkegel 13a in zwei Richtungen längs verschieblich gelagert ist. Im Normalfall kann bei Belastung mittels des Antriebs 22 der Ventilkegel 13a in die offene oder geschlossene Stellung gebracht werden, ohne daß sich an der Vorspannung der Federn 23, 24 etwas ändert.

Es sei angenommen, daß das Gas in Pfeilrichtung A strömt. Tritt ein Störungsfall im Nahbereich der Plattform auf, so kehrt sich die Strömungsrichtung um (Pfeilrichtung B) und der Ventilkegel 13a schließt aufgrund der erhöhten Strömungsgeschwindigkeit des Durchflußmediums gegen die Kraft der Feder 23 selbsttätig. Auf diese Weise wird der Gasfluß aus dem langen Rohrbereich zur Plattform 4 hin unverzüglich unterbrochen.

Wird der Ventilkegel 13a zum Zwecke einer Prüfung motorisch zugefahren und würde in dieser geschlossenen Lage trotz Betätigung des Antriebes verbleiben, so öffnet der Ventilkegel bei einem vorgegebenen Druck des Durchflußmediums entgegen der Kraft der Feder 24 in Pfeilrichtung A.Eine als Raste ausgebildete Fangeinrichtung 27 hält dann den Ventilkegel 13a in der offenen Stellung.

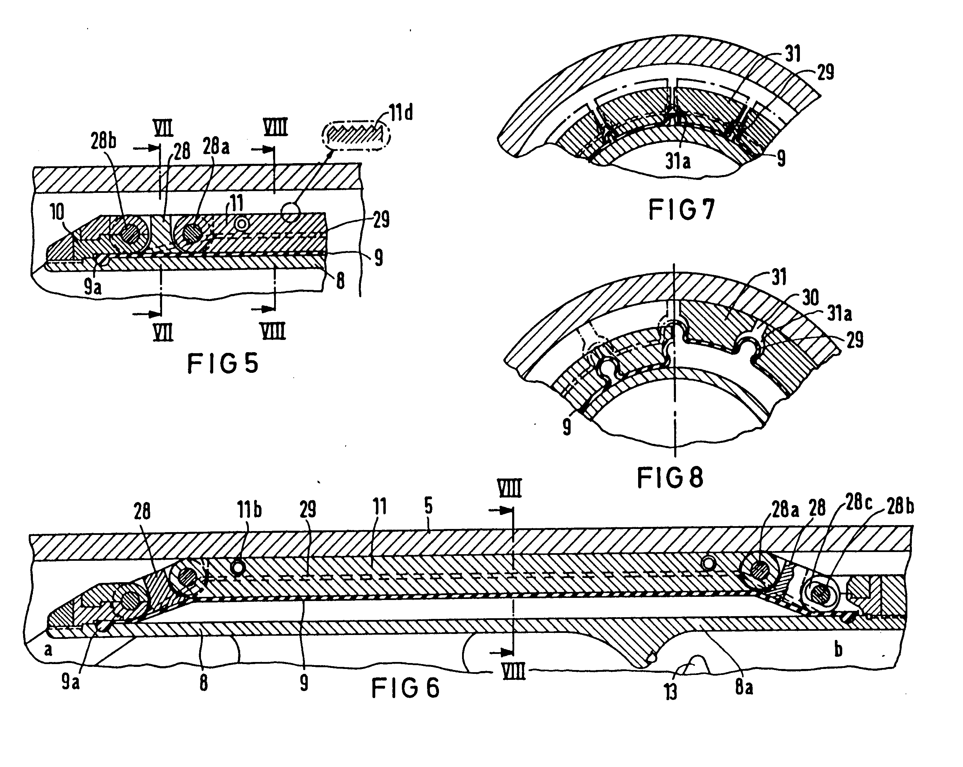

In Fig. 5 ist ein Ausschnitt einer modifizierten Halteeinrichtung der Absperrvorrichtung 7 in der eingezogenen Lage dargestellt. Die geschlitzte Bremshülle 11 ist über in Gelenken 28a, 28b gelagerte Arme 28 mit dem Hohlzylinder 8 verbunden. Diese Arme sind als Schwingen ausgebildet, die bei an die Rohrleitung 5 angelegten Bremsleisten 31 (Fig. 7 und 8) an der dem Druck abgewandten Seite in einem spitzen Winkel zur Rohrachse liegen. An den beiden Enden ist der ringförmige Gummibalg 9 durch einen ringförmigen Klemmkörper 10 befestigt. Dabei hat der Gummibalg 9 in axialer Richtung verlaufende radial angeordnete torusförmige Wulste 29 (siehe Fig. 7, 8), die an den beiden Enden des ringförmigen Gummibalges spitz auslaufen bzw. auf Null abnehmen.

Die geschlitzte metallene Bresmhülle 11 hat in den Schlitzen 30 Ausnehmungen 31a, in die die Wulste 29 hineinragen und im eingezogenen Zustand der Bremshülle ausreichend Platz finden. Im ausgestellten Zustand nehmen der Gummibalg 9 und die Bremshülle 11 die in Fig. 6 gezeichnete Lage ein. Diese Ausbildung hat den Vorteil, daß der Gummibalg in Umfangsrichtung sowohl für die angelegte als auch für die ausgestellte Lage etwa die gleiche abgewickelte Länge besitzt. Die Umfangsvergrößerung infolge der Ausstellbewegung erfolgt durch Formveränderung in den Wulsten 29. Dadurch ist es möglich, den Gummibalg 9 tangential zu armieren, beispielsweise mit Gewebe- oder Gittereinlagen zu versehen, so daß eine hohe Betriebssicherheit entsteht. Damit können spaltüberdeckende Überlappungen entfallen und die Freigängigkeit der Bremshülle kann bedeutend gesteigert werden.

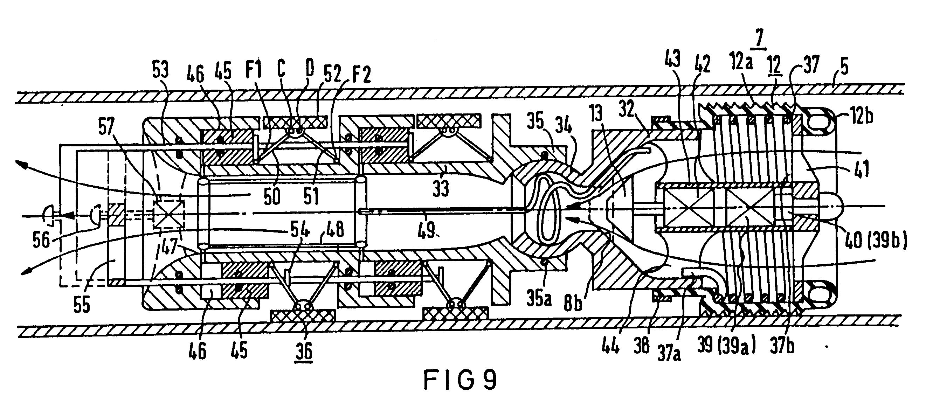

In Figur 9 ist eine andere Verschlußvorrichtung im Schnitt dargestellt. Die obere Schnitthälfte zeigt die Transportstellung und die untere Schnitthälfte die Absperrposition. Die in eine Rohrleitung 5 einführbare Absperrvorrichtung weist einen Hohlzylinder 32 auf, an dem ein Ventil 13 angeordnet ist, das im geöffneten Zustand für den Durchfluß des gesamten Leitungsmediums bemessen ist. An dem Hohlzylinder 32 ist ferner eine radial verstellbare Dichteinrichtung 12 angeordnet, deren Außendurchmesser in der eingezogenen Lage kleiner ist als der Rohrinnendurchmesser. Im ausgestellten Zustand der Dichteinrichtung 12 wird die Absperrvorrichtung zur Rohrleitung hin abgedichtet. Die Dichteinrichtung 12 ist als Ringdichtung ausgebildet und durch eine Zylinderfeder 37 austellbar. Die Dichteinrichtung 12 weist eine Manschette auf, die die Zylinderfeder 37 umgibt und an dem Hohlzylinder 32 durch ein Spannband 38 befestigt ist. An der Außenseite der Manschette sind Dichtlippen 12a angebracht. Die Enden 37a, 37b der Zylinderfeder 37 sind nach innen zu einem Festpunkt bzw. einem als Elektromotor oder Hydraulikantrieb ausgebildeten Antrieb 39 geführt. Dabei ist das eine Ende 37a der Zylinderfeder 37 mit dem Hohlzylinder 32 und das andere Ende 37b über eine Lochscheibe 41 und eine längsverschiebliche Kupplung 40 (Mitnehmer) mit der Welle 39b des Antriebs 39 verbunden.

Im entspannten Zustand der Zylinderfeder 37 ist der Aussendurchmesser größer als der Innendurchmesser des Rohres 5. Wird der Antrieb 39 eingeschaltet, so werden die beiden Enden 37a, 37b der Zylinderfeder 37 gegeneinander verdreht, wodurch der Durchmesser der Zylinderfeder 37 und der Dichteinrichtung 12 auf einen kleineren Durchmesser als der Rohrdurchmesser verringert wird. Zum Anlegen der Ringdichtung 12 an die Rohrinnenwand wird die Drehrichtung des Antriebs 39 umgekehrt, wobei sich die Zylinderfeder 37 entspannt.

Die Dichteinrichtung 12, deren Manschette aus flexiblen Material, vorzugsweise aus Gummi oder Kunststoff ist, wird an ihrem freien Ende durch die Lochscheibe 41 zentral geführt. Die Führungsfläche an der Manschette wird durch eine Ringwulst 12b gebildet, die am freien Ende der Manschette angeordnet ist.

Am Hohlzylinder 32 ist ferner ein Ventil 13 angeordnet, das durch einen elektrischen oder hydraulischen Antrieb 42 betätigbar ist. Dieser Antrieb 42 ist gemeinsam mit dem Antrieb 39 in einer rohrförmigen Halterung 43 untergebracht, die ihrerseits über Arme 44 am Hohlzylinder 32 befestigt ist. Dabei ist das Gehäuse 39a starr mit der Halterung 43 verbunden.

Ein Ende des Hohlzylinders 32 ist nach innen zu verjüngt und zu einem Ventilsitz 8b geformt. Dieses Ende des Hohlzylinders 32 trägt auch ein Kupplungsteil 34, das mit einem an einem zweiten Hohlzylinder 33 angebrachten Kupplungsteil 35 in Eingriff gebracht und gedichtet werden kann. Dabei ist die Kupplung als Kugelgelenk-Rohrkupplung ausgebildet, in der eine oder mehrere Dichtungen 35a angeordnet sind.

Der zweite Hohlzylinder 33 weist die Halteeinrichtung 36 auf, die zum Festbremsen der Absperrvorrichtung an einer vorgegebenen Stelle in der Rohrleitung diente. In Längsrichtung des Hohlzylinders 33 sind Kolben 45 in Zylindern 46 angeordnet. Zu diesen Zylindern 46 führen Druckmittelleitungen 47, 48, 49, die im Bereich vor dem Dichtsitz des Ventils 13 beginnen. Dabei ist das Leitungsstück innerhalb der Kupplungsteile 34, 35 gewendelt ausgeführt.

Jeder Kolben 45 wirkt auf ein Viergelenk ein, das aus je zwei parallelen Hebelpaaren 50, 51 besteht. Ein Fußpunkt F1 des Viergelenkes ist an dem Kolben 45 drehbar gelagert, während der andere Fußpunkt F2 am Hohlzylinder 33 gelenkig angeordnet ist. Die anderen Enden der Hebel sind in je einem Gelenk C bzw. D eines Bremsbackens 52 gelagert. Je nach aufzubringender Bremskraft sind mehrere Kolbeneinheiten hintereinander an dem Hohlzylinder 33 angeordnet. Bei geöffnetem Ventil sind die Bremsbacken in der zurückgezogenen Lage (obere Schnitthälfte). Zum Beaufschlagen der Kolben 45 wird der Differenzdruck vor und hinter dem Ventil ausgenutzt. Dabei kommt bei geschlossenem Ventil 13 der volle Druck des Rohrleitungsmediums in den Zylindern 46 zur Wirkung. Die Bremsbacken bewirken dann im angelegten Zustand das Festbremsen der Absperrvorrichtung in der Rohrleitung.

Alle in Reihe liegenden Längskolben 45 sind mit einer zentral durch die Kolben geführten Rückzugstange 53 so verbunden, daß sie sich in Richtung Bremsstellung frei bewegen können und den Bremsbacken 52 unterschiedlich große Anpreßwege gestatten (siehe untere Schnitthälfte).

Der Rückzug aller Kolben 45 und damit der Bremsbacken 52 erfolgt formschlüssig durch Anschläge 54 auf der Rückzugstange 53, die abgedichtet durch die Kolben 45 hindurchgeführt ist. Da mehrere Kolbenreihen in Umfangsrichtung im Hohlzylinder 33 angeordnet sind, werden alle Enden der Rückzugstangen 53 so zusammengefaßt, daß nur eine zentrale Bedienung durchgeführt zu werden braucht. Es ist günstig, eine alle Stangenenden zusammenfassende sternförmige Vorrichtung 55 mit einem Kupplungsteil 56 zu versehen, so daß ein Transportfahrzeug angekuppelt und durch Ziehen in Pfeilrichtung die Bremsen gelöst werden können. Es ist jedoch auch möglich, das Lösen der Bremsen mittels eines Hydraulikantriebes 57 vorzunehmen, der auf die Vorrichtung 55 einwirkt.

Die Absperrvorrichtung wird während des Betriebes der Rohrleitung mit eingezogenen Bremsbacken 52, geöffnetem Ventil 13 und eingezogener Dichteinrichtung 12 in die Rohrleitung 5 durch das Rohrleitungsmedium eingeführt, bzw. eingeschwommen oder durch ein Transportfahrzeug bis zu einer vorgegebenen Stelle in der Rohrleitung gebracht. Durch elektrische Fernsteuerung wird dann die Dichteinrichtung 12 betätigt, wobei die Ringfeder 37 die Gummimanschette an die Rohrinnenwand drückt. Die Kraft der Feder 37 ist in vorteilhafter Weise dabei so bemessen, daß die Dichteinrichtung 12 bei geöffnetem Ventil auch als Betriebsbremse wirkt, welche die Absperrvorrichtung während des Durchströmens des Leitungsmediums in der vorgegebenen Lage festhält. In der Absperrvorrichtung 7 sind Mittel zum fernsteuerbaren Schließen und Öffnen des Ventils 13 und zum selbsttätigen Schließen des Ventils 13 vorgesehen. Tritt ein Leck auf, so wird dies von Überwachungseinrichtungen erkannt und das Ventil 13 kann über eine an sich bekannte Fernsteuereinrichtung von einer zentralen Stelle aus geschlossen werden. Die dabei entstehende Druckdifferenz in den Hohlzylindern 32 und 33 wird zum Erzeugen der erforderlichen höheren Festhaltekraft ausgenutzt. Dabei werden die Kolben 45 über die Leitungen 47, 48, 49 mit dem hohen Betriebsdruck beaufschlagt und die Bremsbacken 52 an die Innenwand des Rohres 5 angepreßt. Dabei entsteht eine Haltekraft, die größer ist als die axiale auf die Absperrvorrichtung wirkende Schiebekraft.

**Patentansprüche**

1. In einer Rohrleitung bewegbare Absperrvorrichtung (7), die in die Rohrleitung (5) einsetzbar und in der Rohrleitung (5) während des normalen Betriebs der Rohrleitung (5), während welchem ein Strömungsmedium durch die Rohrleitung (5) strömt, geeignet positionierbar ist, wobei die Absperrvorrichtung (7)
   a) einen Hohlzylinder (8)
   b) eine am Hohlzylinder (8) vorgesehene Halteeinrichtung zum Festbremsen der Absperrvorrichtung (7) an einer vorgegebenen Stelle in der Rohrleitung (5),
   c) ein zum Durchlass des Strömungsmediums durch die Rohrleitung (5) am Hohlzylinder (8) vorgesehenes Ventil (13), das zwischen einer Öffnungs- und einer Verschlußstellung verstellbar ist,
   d) eine fernsteuerbare, radial verstellbare Dichteinrichtung (12) zum Abdichten des zwischen der Wandung der Rohrleitung (5) und dem Hohlzylinder (8) gegebenen Spaltraums (16), an dem die Dichteinrichtung (12) am Hohlzylinder (8) angebracht und zwischen dem Hohlzylinder (8) und der Wandung der Rohrleitung (5) angeordnet ist,
   e) eine Einrichtung zum ferngesteuerten Verschliessen und Öffnen des Ventils (13), und
   f) eine Einrichtung zum Pressen der Dichteinrichtung (12) gegen die Wandung der Rohrleitung (5) ab einer bestimmten Druckdifferenz zwischen der Seite (b), an welcher das Strömungsmittel in die Absperrvorrichtung eintritt, und der Seite (a), an welcher das Strömungsmittel aus der Absperrvorrichtung (7) austritt,
   aufweist,
   **dadurch gekennzeichnet,**
   dass das Ventil (13) im Hohlzylinder (8) angeordnet und zum normalen Durchlass des gesamten, die Rohrleitung (5) durchströmenden Strömungsmediums bemessen ist, und dass eine Einrichtung zum automatischen Verschliessen des Ventils (13) vorgesehen ist, wenn die Strömungsgeschwindigkeit des Strömungsmittels in der Rohrleitung (5) eine normale Betriebsgeschwindigkeit übersteigt.

2. Absperrvorrichtung nach Anspruch 1,
   **dadurch gekennzeichnet,**
   dass die Halteeinrichtung (12) einen ringförmigen Gummibalg (9), der am Hohlzylinder (8) mittels Klemmkörper (10) befestigt ist, wodurch zwischen dem Gummibalg (9) und dem Hohlzylinder (8) ein Hohlraum festgelegt ist, und eine längsgeschlitzte Bremshülle (11) aus Metall aufweist, die am Gummibalg (9) angeordnet ist.

3. Absperrvorrichtung nach Anspruch 1 oder 2,
   **dadurch gekennzeichnet,**
   dass ein Fahrwerk mit Rädern (7a) und Antrieben (7b) vorgesehen ist.

4. Absperrvorrichtung nach Anspruch 2,
   **dadurch gekennzeichnet,**
   dass die geschlitzte Bremshülle (11) mit geschlitzten Innenbunden (11a) versehen ist, die jeweils in einer Ringnut (8c) des Hohlzylinders (8) radial verschiebbar geführt sind.

5. Absperrvorrichtung nach Anspruch 4,
   **dadurch gekennzeichnet,**
   dass die geschlitzte Bremshülle (11) Bremskufen (11c) besitzt.

6. Absperrvorrichtung nach Anspruch 5,

**dadurch gekennzeichnet,**
dass die Bremskufen (11c) tangential überlappt ausgebildet sind.

7.  Absperrvorrichtung nach Anspruch 5 oder 6,
**dadurch gekennzeichnet,**
dass den Bremskufen (11c) Rückzugselemente (11b) zugeordnet sind.

8.  Absperrvorrichtung nach einem der Ansprüche 2 bis 7,
**dadurch gekennzeichnet,**
dass der Gummibalg (9) mehrlagig ausgebildet ist, wobei die einzelnen Lagen (x, y, z) unterschiedliche Härte aufweisen.

9.  Absperrvorrichtung nach einem der Ansprüche 2 bis 8,
**dadurch gekennzeichnet,**
dass die Dicke des Gumibalgs (9) kleiner als 10 mm, insbes. 5 mm, ist.

10. Absperrvorrichtung nach einem der Ansprüche 2 bis 9,
**dadurch gekennzeichnet,**
die Bremshülle (11) mit einem einen hohne Reibwert aufweisenden Belag (11d) versehen ist.

11. Absperrvorrichtung nach einem der Ansprüche 2 bis 10,
**dadurch gekennzeichnet,**
dass die Bremshülle (11) Rillen (18) aufweist, die sich von der Seite (b) zur Seite (a) erstrecken.

12. Absperrvorrichtung nach einem der vorhergehenden Ansprüche,
**dadurch gekennzeichnet,**
dass die Einrichtung zum Verschliessen des Ventils eine Einrichtung enthält, die bei Auftreten eines Überdruckes entgegen der Schliessrichtung das Ventil (13) öffnet.

13. Absperrvorrichtung nach einem der Ansprüche 2 bis 12,
**dadurch gekennzeichnet,**
dass die geschlitzte Bremshülle (11) mit dem Hohlzylinder (8) über als Schwingen ausgebildete Arme (28) verbunden ist.

14. Absperrvorrichtung nach Anspruch 13,
**dadurch gekennzeichnet,**
dass die Arme (28) bei an die Rohrleitung angelegter Bremshülle (11) an der dem Druck abgewandten Seite in einem spitzen Winkel zur Rohrachse liegen.

15. Absperrvorrichtung nach einem der vorhergehenden Ansprüche,
**dadurch gekennzeichnet,**
dass auf einer Verstellspindel (21) für das Ventil (13) zwei vorgespannte Druckfedern (23, 24) mit Apschlägen (25, 26) angeordnet sind, zwischen denen das Ventil (13) längsverschieblich gelagert ist.

16. Absperrvorrichtung nach einem der vorhergehenden Ansprüche,
**dadurch gekennzeichnet,**
dass eine als Raste ausgebildete Fangeinrichtung (27) vorgesehen ist, die das Ventil (13) dann, wenn es durch den Druck des Durchflussmediums entgegen dem Druck der Feder (24) in die offene Stellung gebracht worden ist, festhält.

17. Absperrvorrichtung nach einem der Ansprüche 2 bis 16,
**dadurch gekennzeichnet,**
dass der Gummibalg (9) tangential armiert, insbes. mit Gewebe- oder Gittereinlagen versehen ist.

18. Absperrvorrichtung nach einem der vorhergehenden Ansprüche,
**dadurch gekennzeichnet,**
dass zwei Hohlzylinder (32, 33) vorgesehen sind und zumindest an einem Ende des ersten Hohlzylinders (32) ein Kupplungsteil (34) angeordnet ist, das mit einem an dem zweiten Hohlzylinder (33) angebrachten Kupplungsteil (35) in Eingriff gebracht und gedichtet werden kann, wobei am ersten Hohlzylinder (32) das Ventil (13) und die radial verstellbare Dichteinrichtung (12) und am zweiten Hohlzylinder (33) die Halteeinrichtung (36) angeordnet ist.

**Claims**

1.  A shut-off appliance (7) movable in a pipeline that can be inserted into the pipeline (5) and be suitably positioned in the pipeline (5) during the normal operation of the pipeline (5) while a flow medium is flowing through the pipeline (5), wherein the shut-off appliance (7) has
    a) a hollow cylinder (8)
    b) a retaining device provided on the hollow cylinder (8) for securing the shut-off appliance (7) by a braking action at a predetermined position in the pipeline (5),
    c) a valve (13) provided on the hollow cylinder (8) for allowing the flow medium to pass through the pipeline (5), which valve is adjustable between an open position and a closed position,

d) a remote controlled radially adjustable sealing device (12) for sealing the gap (16) provided between the wall of the pipeline (5) and the hollow cylinder (8), in which gap, the sealing device (12) is mounted on the hollow cylinder (8) and arranged between the hollow cylinder (8) and the wall of the pipeline (5),

e) a device for the remote controlled closing and opening of the valve (13), and

f) a device for pressing the sealing device (12) against the wall of the pipeline (5), starting with a given pressure difference between the side (b) where the flow medium enters the shut-off appliance and the side (a) where the flow medium emerges from the shut-off appliance (7),

**characterized in that**

the valve (13) is arranged in the hollow cylinder (8) and dimensioned for the normal throughflow of the total flow medium flowing through the pipeline (5), and that provision is made for a device for the automatic closing of the valve (13) when the rate of flow of the flow medium in the pipeline (5) exceeds a normal operating speed.

2. A shut-off appliance according to claim 1,
**characterized in that**
the retaining device (12) has an annular rubber bellows (9) which is secured to the hollow cylinder (8) by means of a clamping body (10) whereby a cavity is defined between the rubber bellows (9) and the hollow cylinder (8), and a braking sleeve (11) made of metal, with an elongate slit, which braking sleeve is arranged on the rubber bellows (9).

3. A shut-off appliance according to claim 1 or 2
**characterized in that**
provision is made for a carriage with wheels (7a) and drives (7b).

4. A shut-off appliance according to claim 2
**characterized in that**
the slit braking sleeve (11) is provided with slit inner collars (11a) which are respectively carried in an annular groove (8c) of the hollow cylinder (8) for radial displacement.

5. A shut-off appliance according to claim 4,
**characterized in that**
the slit braking sleeve (11) has brake skids (11c).

6. A shut-off appliance according to claim 5,
**characterized in that**
the brake skids (11c) are designed with a tangential overlap.

7. A shut-off appliance according to claim 5 or 6,
**characterized in that**
return elements (11b) are assigned to the brake skids (11c).

8. A shut-off appliance according to one of claims 2 to 7,
**characterized in that**
the rubber bellows (9) is designed with several layers, the individual layers (x, y, z) having different hardnesses.

9. A shut-off appliance according to one of claims 2 to 8,
**characterized in that**
the thickness of the rubber bellows (9) is less than 10mm, in particular 5mm.

10. A shut-off appliance according to one of claims 2 to 9,
**characterized in that**
the braking sleeve (11) is provided with a lining (11d) having a very high coefficient of friction.

11. A shut-off appliance according to one of the preceding claims,
**characterized in that**
the braking sleeve (11) has grooves (18) extending from the side (b) to the side (a).

12. A shut-off appliance according to one of the preceding claims,
**characterized in that**
the device for closing the valve contains a device which opens the valve (13) in the event of any excess pressure against the closing direction.

13. A shut-off appliance according to one of claims 2 to 12,
**characterized in that**
the slit braking sleeve (11) is connected to the hollow cylinder (8) via arms (28) designed as rockers.

14. A shut-off appliance according to claim 13,
**characterized in that**
when the braking sleeve (11) is applied to the pipeline, the arms (28) lie at an acute angle to the pipe axis on the side remote from the pressure.

15. A shut-off appliance according to one of the preceding claims,
**characterized in that**
two prestressed compression springs (23, 24) with stops (25, 26) are arranged on an adjustment spindle (21) for the valve (13), between which stops the valve (13) is mounted for longitudinal displacement.

16. A shut-off appliance according to one of the preceding claims,
    **characterized in that**
    provision is made for a catch device (27) designed as a ratchet which holds the valve (13) in its position when it has been brought into the open position by the pressure of the throughflow medium against the pressure of the spring (24).

17. A shut-off appliance according to one of claims 2 to 16,
    **characterized in that**
    the rubber bellows (9) is tangentially reinforced, in particular, with fabric or grid inserts.

18. A shut-off appliance according to one of the preceding claims,
    **characterized in that**
    provision is made for two hollow cylinders (32, 33) and that there is arranged on at least one end of the first hollow cylinder (32) a coupling element (34) that can be brought to engage with a coupling element (35) arranged on the second hollow cylinder (33) and be packed, in which arrangement the valve (13) and the radially adjustable sealing device (12) are arranged on the first hollow cylinder (32) and the retaining device (36) on the second hollow cylinder (33).

**Revendications**

1. Dispositif de barrage (7) mobile dans une conduite tubulaire, pouvant être mis en place dans ladite conduite tubulaire et pouvant être positionné de manière appropriée dans ladite conduite tubulaire (5) au cours du fonctionnement normal de la conduite (5) pendant lequel un courant de fluide s'écoule par la conduite (5), du type dans lequel le dispositif de barrage (7) comprend :
   a) Un cylindre creux (8),
   b) Un dispositif d'arrêt prévu sur le cylindre creux (8) pour le freinage du dispositif de barrage (7) en un emplacement pré-déterminé dans la conduite tubulaire (5),
   c) Une soupape (13) prévue sur le cylindre creux (8) pour le passage du courant de fluide dans la conduite tubulaire (5) et qui est réglable entre une position d'ouverture et une position d'obturation,
   d) Un organe de retenue (12) réglable radialement et commandé à distance pour l'obturation de l'espace lamellaire (16) entre la paroi de la conduite tubulaire (5) et le cylindre creux (8), dans lequel l'organe de retenue (12) est monté contre le cylindre creux (8) et entre le cylindre creux (8) et la conduite tubulaire (5),
   e) Un élément pour l'ouverture et la fermeture à distance de la soupape (13), et
   f) Un organe comprimant l'organe de retenue (12) contre la paroi de la conduite tubulaire (5) à partir d'une différence de pression déterminée entre le coté (a) par lequel le courant de fluide pénètre dans le dispositif de barrage et le coté (b) par lequel le courant de fluide sort du dispositif de barrage (7), caractérisé en ce que la soupape (13) est disposée dans le cylindre creux (8) et dimensionnée pour le passage normal de la totalité du courant de fluide traversant la conduite tubulaire (5) et en ce qu'il est prévu un organe pour la fermeture automatique de la soupape (13) quand la vitesse d'écoulement du courant de fluide dans la conduite tubulaire (5) dépasse une vitesse de fonctionnement normale.

2. Dispositif de barrage selon la revendication 1, caractérisé en ce que l'organe de retenue (12) est réuni à un soufflet en caoutchouc (9) de forme annulaire fixé au cylindre creux (8) par un élément de pincement (10), de sorte qu'entre le soufflet en caoutchouc (9) et le cylindre creux (8) est ménagé un espace vide et présente une douille de freinage en métal (11) fendue longitudinalement et disposée par dessus le soufflet de caoutchouc (9).

3. Dispositif de barrage selon les revendications 1 ou 2, caractérisé en ce qu'il comporte un bâti de cheminement avec des roues (7a) et un système d'entrainement (7b).

4. Dispositif de barrage selon la revendication 2, caractérisé en ce que la douille de freinage fendue (11) est équipée de bandeaux intérieurs (11a), guidé chacun dans une rainure annulaire (8c) du cylindre creux (8) et mobile radialement.

5. Dispositif de barrage selon la revendication 4, caractérisé en ce que la douille de freinage fendue (11) présente des patins de freinage (11c).

6. Dispositif de barrage selon la revendication 5, caractérisé en ce que les patins de freinages (11c) sont superposés tangentiellement.

7. Dispositif de barrage selon les revendications 5 ou 6, caractérisé en ce que, aux patins de freinage (11c) sont associés des éléments de retrait.

8. Dispositif de barrage selon l'une des revendications 2 à 5, caractérisé en ce que le soufflet en caoutchouc est formé de plusieurs couches, les couches individuelles (x, y, z) présentant des duretés différentes.

9. Dispositif de barrage selon l'une des revendications 2 à 8, caractérisé en ce que l'épaisseur du soufflet en caoutchouc (9) est inférieure à 10 mm, et plus spécialement à 5 mm.

10. Dispositif de barrage selon l'une des revendications 2 à 9, caractérisé en ce que la douille de freinage (11) est munie d'une couche (11d) présentant un coefficient de frottement élevé.

11. Dispositif de barrage selon l'une des revendications 2 à 10, caractérisé en ce que la douille de freinage (11) présente des cannelures (18) allant de la face (b) à la face (a).

12. Dispositif de barrage selon l'une des revendications précédentes, caractérisé en ce que l'organe destiné à la fermeture de la soupape contient un élément qui s'ouvre sous l'effet d'une surpression s'opposant à la direction de fermeture de la soupape (13).

13. Dispositif selon l'une des revendications 2 à 12, caractérisé en ce que la douille de freinage fendue (11) est réunie au cylindre creux (8) pardes bras (28) en forme d'ailettes.

14. Dispositif de barrage selon la revendication 13, caractérisé en ce que les bras (28) adaptés à la douille de freinage (11) dans la conduite tubulaire font un angle aigu avec l'axe du tube du coté soumis à la pression.

15. Dispositif de barrage selon l'une des revendications précédentes, caractérisé en ce que, sur une broche de réglage (21) pour la soupape (13) sont montés deux ressorts de compression précontraints (23, 24) prenant appui sur des butées (25, 26), et entre lesquels la soupape (13) est disposée mobile longitudinalement.

16. Dispositif de barrage selon l'une des revendications précédentes, caractérisé en ce qu'il comporte un élément de retenue (27) jouant le rôle d'organe de sécurité, qui maintient la soupape (13) quand elle est amenée en position ouverte par la pression du milieu en circulation à l'encontre de la pression du ressort (24).

17. Dispositif de barrage selon l'une des revendications 2 à 16, caractérisé en ce que le soufflet (9) est équipé d'une armature tangentielle en particulier par des inserts en forme de grille ou de tissus.

18. Dispositif de barrage selon l'une des revendications précédentes, caractérisé en ce qu'il comporte deux cylindres creux (32, 33) et qu'au moins à une extrémité du premier cylindre creux (32) est monté un organe d'accouplement (34) pouvant s'accrocher et se solidariser avec un organe d'accouplement (35) monté sur le second cylindre creux (33), sur le premier cylindre creux (32) étant montés la soupape (13) et l'organe formant joint (12) réglable radialement, et sur le second cylindre creux (33) étant monté l'organe de retenue (36).

FIG 1

FIG 2

FIG 3

EP 0 243 658 B1

FIG 4

FIG 7

FIG 8

FIG 5

FIG 6

FIG 9

EP 0 243 658 B1